# EUROPEAN PATENT SPECIFICATION

(11) **EP 2 163 533 B1**
(45) Date of publication and mention of the grant of the patent: **20.08.2014**
(21) Application number: 09460039.2
(22) Date of filing: 04.09.2009
(51) Int. Cl.: C04B 111/00, C04B 28/02, C04B 28/26

(54) **A hydraulic mixture for disposing environmentally dangerous waste in ground landfills**
Hydraulische Mischung zur Entsorgung von umweltgefährdendem Abfall in Erddeponien
Mélange hydraulique pour l'élimination de déchets dangereux pour l'environnement dans des décharges terrestres

(30) Priority: 05.09.2008 PL 38603008 U
(43) Date of publication of application: 17.03.2010
(73) Proprietor: Przedsiebiorstwo Robót Geologiczno-Wiertniczych G. Janik & R. Kus Spólka Jawna, 41-260 Slawków (PL)
(72) Inventor: Kus, Roman, 41-260 Slawkow (PL)
(74) Representative: Tabor-Kmiecik, Katarzyna

(56) References cited:
- EP-A1- 0 547 716
- US-A- 4 518 508
- K. ZHANG, Y.CHEN, F.DENG, Q.TIAN: "Retention of clay-solidified grouting curtain to Cd2+,Pb2+ and Hg2+ in landfill of municipal solid waste" J.CENT.SOUTH UNIV.TECHNOL., vol. 11, no. 4, December 2004 (2004-12), pages 419-422, XP002563168
- I.B.PLECAS, S.DIMOVIC: "Immobilization of industrial waste in cement-bentonite clay matrix" BULL.MATER.SCI., vol. 27, no. 2, April 2004 (2004-04), pages 175-178, XP002563169

## Description

The present invention relates to a self-solidifying mixture for disposing environmentally dangerous waste in ground landfills, in particular in underground mine dumps or layered sedimentary rocks formations. The invention is related to environment protection, degraded post-industrial grounds reclamation, neutralisation and disposal of dangerous waste of industrial and ground rectification origin, in particular post-flotation waste of metal ore mining.

Polish patent No 193331 discloses a waste mixture apt for filing voids in postexploitation terrains and reconsolidation of abandoned workings volumes in mines which contains post-flotation waste having average density of 450 to 600 g/dm³ and undrained post-carbide clay of transient humidity of 50% in volume ratio of 2:1 to 4:1. The mixture may also contain an addition of fly ashes in volume ratio with regard to post-flotation waste and undrained post-carbide clay amounts from 1:1:0.1 to 2:2:2. Addition of fly ashes improves the characteristic of solidification of water suspensions in destination site and buffers possible decomposition of sulfides from pyrite. Drain of excessive water that takes place during sedimentation and solidification of the mixture needs to be removed by drain-ways to clarifiers and pumped to a reservoir on the ground surface. Depending on the composition of the mixture binding thereof begins between 5^{th} and 20^{th} day from the day of preparation and takes place within 1 to 3 days. Post-carbide clay as a binding activator is also used in mixtures disclosed in Polish patents No. 173452 and 174316. Other mixtures containing expensive binding activators, such as Portland cement, calcium chloride, acrylic resins and silicon stabilising mixtures containing water glass and organic hardeners are also known from the state of art.

European patent specification EP 0 547 716 discloses a method for fixing toxic or non-toxic waste material by allowing the waste material to absorb on an absorbent to form a waste material-containing absorbent, and mixing the waste material-containing absorbent with a hydraulic binder and a hardening activator to form a hard material, wherein the waste material-containing absorbent is, before the mixing with a hydraulic binder and a hardening activator, coated with an occluding agent. Patent specification US 4 518 508 discloses a method for treating aqueous liquid and semi-liquid wastes by solidification comprising the steps of mixing with the waste a dry water-reactive solidification agent comprising cement, a dry water absorbent material, and a powdered alkali metal silicate in a quantity sufficient to convert the mixture into a chemically and physically stable solid end product substantially insoluble in water and which contains no substantially free-standing water, and allowing the mixture to set to a sedentary mass.

It is the object of the present invention to provide a hydraulic mixture of a composition that is optimal with regard to the incurred costs and working properties of a solidified volume.

According to the invention it is provided a hydraulic mixture for disposing environmentally dangerous waste in ground landfills, and in particular in underground mine dumps or layered sedimentary rocks formations prepared on the basis of a mineral binder and containing dangerous waste of industrial or ground rectification origin and in particular post-flotation waste from metal ore mining, said mixture containing:
an aqueous suspension of ultra-fine mineral binder particles containing more than 90% of particles having diameter less than 20 µm, selected from clay that at density of ρ = 1200 to 1300 kg/m³ amounts to 35-55% by weight of the mixture,
cement in amount of 10 to 15 % by weight of the mixture,
water glass in amount of 0.2 to 0.5 % by weight of the mixture, and
dangerous waste in amount of 30 to 35 % by weight of the mixture
wherein the dangerous waste is post-flotation waste of metal ore mining.

Appropriate proportions and conjoining the mineral binder with small amounts of binding activators result in very good material properties of the new, hardened structure:
- capacity to deposit abandoned workings water,
- very low hydraulic conductivity of below 1 x 10⁻⁹ m/s,
- compression strength of above 1 MPa, and
- plasticity ensuring maintaining the immobilising properties of dangerous waste.

Tightness of the structure and lack of drains makes it impossible for the incorporated dangerous waste to flush out so that the material may be employed in grounds reclamation.

The invention is described below in the following non-limiting two examples of preparation of the mixtures.

### Example 1

15 % by weight of cement, 0.5 % by weight of water glass and 20 % by weight of copper ore post-flotation waste were added in an agitator to a base solution of 64.5 % by weight of an aqueous suspension of clay from 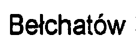 having density 1.25 g/cm³ prepared earlier in a mixer.

After 28 days of maturing, a cylindrical specimen of toughened paste was placed in a filter-press and flooded with distilled water. The specimen was subsequently pressurised with 3 bar and within 24 to 120 h the velocity of the flow of water through the specimen was determined by measuring the amount of drain in a time unit by digital analytical scale WPS 720/C/2 made by Radwag. A hydraulic conductivity of 1.9 x 10⁻⁹ m/s was determined on the basis of the flow velocity measurements. Compression strength of the specimen was 1.10 MPa.

### Example 2

A specimen of toughened paste prepared with the same constituents but with different percentage by weight ratios of: 54.5 % by weight of an aqueous suspension of clay from 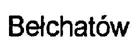 having density 1.25 g/cm³, 15 % by weight of cement, 0.5 % by weight of water glass and 30 % by weight of copper ore post-flotation waste displayed hydraulic conductivity of 6.0 x 10⁻⁹ m/s and compression strength of 1.20 MPa.

## Claims

1. A hydraulic mixture for disposing environmentally dangerous waste in ground landfills, and in particular in underground mine dumps or layered sedimentary rocks formations prepared on the basis of a mineral binder and containing dangerous waste of industrial or ground rectification origin and in particular post-flotation waste from metal ore mining, **characterised in that** it contains:
- an aqueous suspension of ultra-fine mineral binder particles containing more than 90% of particles having diameter less than 20 µm, selected from clay that at density of ρ = 1200 to 1300 kg/m³ amounts to 35-55% by weight of the mixture,
- cement in amount of 10 to 15 % by weight of the mixture,
- water glass in amount of 0.2 to 0.5 % by weight of the mixture, and
- dangerous waste in amount of 30 to 35 % by weight of the mixture wherein the dangerous waste is post-flotation waste of metal ore mining.

## Patentansprüche

1. Das hydraulische Gemisch zur Entsorgung der umweltgefährlichen Abfälle auf geordneten Abfallsammelstellen, insbesondere auf unterirdischen Grubensammelstellen oder in Schichten der Sedimentgesteine. Präparat, das auf Basis des besten Mineralbinders vorbereitet wurde. Es ist für gefährliche, aus Industrie stammende Abfälle bestimmt, insbesondere für Abfälle nach Flotation im Bergbau der Metallerze. Das Ersatzprodukt, wobei es enthält:
- Wassersuspension mit sehr feinen Partikeln des Mineralbinders, der mehr als 90% der Partikel mit dem Durchmesser kleiner als 20 µm enthält; Wassersuspension wurde aus Lehm genommen, der bei Dichte p = 1200 bis 1300 kg/m3 35-55% des Gewichtes des Gemisches beträgt,
- Zement entsprechend 10 bis 15% des Gewichtes des Gemisches,
- Wasserglas entsprechend 0,2 bis 0,5% des Gewichtes des Gemisches, sowie
- Abfälle entsprechend 30 bis 35% des Gewichtes des Gemisches.

## Revendications

1. Mélange hydraulique pour éliminer les déchets dangereux pour l'environnement dans les décharges structurées, en particulier dans les décharges minières souterraines ou les couches de roches sédimentaires. La formulation préparée sur la base de liants minéraux. Conçue pour les déchets industriels dangereux de l'origine industrielle, en particulier les déchets de flottation dans les mines de minerais métalliques. Produit **caractérisé par** :
- suspension aqueuse avec des particules très fines d'un liant minéral contenantplus de 90% de particules d'un diamètre inférieur à 20 microns, à partir de l'argile qui dans une densité p = de 1200 à 1300 kg/m3 est de 35 à 55% en poids du mélange,
- ciment en une quantité allant de 10 à 15% en poids du mélange,
- verre liquide en une quantité allant de 0,2 à 0,5% en poids du mélange, et
- déchets de flottation en une quantité allant de 30 à 35% en poids du mélange.
